Europäisches Patentamt

European Patent Office

Office européen des brevets

(19)

(11) Numéro de publication : **0 669 525 A2**

# (12) DEMANDE DE BREVET EUROPEEN

(21) Numéro de dépôt : 95400387.7

(22) Date de dépôt : 23.02.95

(51) Int. Cl.⁶ : **G01M 11/00**

(30) Priorité : 25.02.94 FR 9402179

(43) Date de publication de la demande :
**30.08.95 Bulletin 95/35**

(84) Etats contractants désignés :
**DE GB**

(71) Demandeur : **FRANCE TELECOM**
**Etablissement autonome de droit public,**
**6, Place d'Alleray**
**F-75015 Paris (FR)**

(72) Inventeur : **Boisrobert, Christian**
**Le Tertre La Clarté**
**F-22700 Perros Guirec (FR)**
Inventeur : **Dontenwille, Michel**
**31 Résidence Corlay**
**F-22300 Lannion (FR)**
Inventeur : **Corne, Loic**
**53 rue de l'Aubépine**
**F-22360 Langueux (FR)**

(74) Mandataire : **Dubois-Chabert, Guy et al**
**Société de Protection des Inventions**
**25, rue de Ponthieu**
**F-75008 Paris (FR)**

(54) **Système interférométrique de détection et de localisation de défauts réflecteurs de structures guidant la lumière.**

(57)    Ce système comprend un premier interféromètre comportant une source de lumière incohérente (4), un coupleur optique (6) relié à la source et à la structure (2), des moyens (18a, 18b) de déplacement d'un support (16) en translation à vitesse constante, un réflecteur (24) fixé au support, des moyens de photodétection (26) qui fournissent lors d'une translation du support, un interférogramme pour un défaut réflecteur de la structure, des moyens de génération d'impulsions (28 à 48) et des moyens (50) qui échantillonnent l'interférogramme par les impulsions, mémorisent les échantillons obtenus et localisent les défauts réflecteurs.

FIG.1

EP 0 669 525 A2

La présente invention concerne un système interférométrique de détection et de localisation de défauts réflecteurs de structures guidant la lumière.

Par "structures guidant la lumière", on entend les guides d'ondes optiques comme par exemple les fibres optiques, les coupleurs optiques, et même les émetteurs lasers.

La présente invention s'applique notamment au domaine des télécommunications optiques et permet la localisation de dioptres faiblement réfléchissants dans de tels guides optiques, avec une grande résolution.

L'invention permet aussi de mesurer des caractéristiques de transmission de tels guides optiques ainsi que des coefficients de réflexion de structures guidantes passives ou actives.

On connaît déjà par le document suivant, auquel on se reportera :

(1) High-spatial-resolution and high-sensitivity interferometric optical-time-domain reflectometer, Masaru Kogayashi, Juichi Noda, Kazumasa Takada and Henry F. Taylor, SPIE Conference, Orlando, Florida Avril 1-5, 1991, 1474-40,

un système interférométrique de détection et de localisation de défauts réflecteurs.

Ce système connu exploite simplement la forme d'interférogrammes qu'il permet d'obtenir pour localiser les défauts.

La présente invention résout le problème de l'obtention d'un système interférométrique apte à définir la position "d'accidents" de propagation (défauts réflecteurs) répartis le long de guides optiques, avec une plus grande précision que celle à laquelle conduit le système connu par le document (1).

Pour ce faire, la présente invention utilise un interféromètre du type Michelson en lumière incohérente ainsi que des moyens d'échantillonnage d'interférogrammes obtenus avec cet interféromètre.

On connaît aussi un autre système interférométrique de détection et de localisation de défauts réflecteurs par le document suivant auquel on se reportera :

(2) FR-A-2 694 088 (voir aussi WO 94/02823 publié le 3 février 1994).

Cependant, cet autre système connu est un système complexe, nécessitant trois supports déplaçables en translation.

La présente invention vise un système beaucoup plus simple que cet autre système connu.

De façon précise, la présente invention a pour objet un système interférométrique de détection et de localisation de défauts réflecteurs d'une structure guidant la lumière, ce système comprenant un premier interféromètre comportant :

- une source de lumière incohérente,
- un coupleur optique à quatre branches, dont une première branche est optiquement couplée à la source de lumière incohérente et dont une deuxième branche est optiquement couplée à la structure guidant la lumière,
- un support,
- des moyens de déplacement du support en translation suivant une direction donnée et à vitesse constante,
- un premier réflecteur de lumière qui est fixé au support et qui est apte à réfléchir, parallèlement à la direction de translation du support, un faisceau lumineux parallèle à cette direction,
- des premiers moyens optiques prévus pour recevoir la lumière issue d'une troisième branche du coupleur et pour envoyer cette lumière vers le premier réflecteur, suivant la direction de translation du support,
- des premiers moyens de détection de lumière qui sont optiquement couplés à une quatrième branche du coupleur et qui sont aptes à fournir en sortie, lors d'une translation du support, un premier interférogramme sous forme électrique, pour chaque défaut réflecteur que la structure guidant la lumière est susceptible de comporter,

le système étant caractérisé en ce qu'il comprend en outre :
- des moyens de génération de premières impulsions électriques périodiques, et
- des moyens électroniques de traitement qui reçoivent en entrée ces premières impulsions et le premier interférogramme sous forme électrique et qui sont aptes à échantillonner ce premier interférogramme par les premières impulsions, mémoriser les échantillons ainsi obtenus et localiser les défauts réflecteurs de la structure guidant la lumière au moyen des échantillons mémorisés.

Les premiers moyens optiques peuvent comprendre un miroir parabolique hors d'axe ("off axis") dont le foyer coïncide avec l'extrémité de la troisième branche du coupleur et qui est apte à réfléchir la lumière issue de cette troisième branche parallèlement à la direction de translation du support.

L'intérêt d'utiliser un tel miroir réside dans le fait que la réflexion sur ce miroir, qui est une surface polie, réfléchissante, est achromatique : la position des images formées par ce miroir et les chemins optiques correspondants sont indépendants de la longueur d'onde des rayonnements.

Ce miroir n'est pas un élément optiquement dispersif et n'affecte pas le spectre optique de la source de lumière choisie.

Plus le spectre optique de cette source est étendu, meilleure est la résolution spatiale du système.

De plus, les alignements et les réglages optiques sont effectués plus aisément et rapidement lorsqu'on utilise une source émettant des rayonnements visibles et lorsque les éléments optiques à aligner ont des propriétés indépendantes des longueurs d'onde de ces rayonnements (ce qui est le cas du miroir).

Selon un premier mode de réalisation particulier du système objet de l'invention, les moyens de génération des premières impulsions comprennent un deuxième interféromètre et des moyens de mise en forme, le deuxième interféromètre comportant :

- une source-laser monomode,
- des moyens séparateurs de faisceau lumineux prévus pour recevoir un faisceau lumineux issu de cette source-laser et pour transmettre une première partie et réfléchir une deuxième partie de ce faisceau,
- un deuxième réflecteur de lumière prévu pour réfléchir cette première partie vers les moyens séparateurs qui forment à partir de celle-ci un premier faisceau lumineux,
- des deuxièmes moyens optiques fixés au support et des troisièmes moyens optiques qui sont placés en regard de ce support et qui coopèrent avec les deuxièmes moyens optiques pour recevoir et réfléchir, suivant un chemin optique déterminé, ladite deuxième partie vers les moyens séparateurs qui forment à partir de celle-ci un deuxième faisceau lumineux et font interférer celui-ci avec le premier faisceau lumineux, le chemin optique déterminé variant de la quantité N.Δx lorsque le support est déplacé en translation d'une longueur Δx, N étant un nombre dont le produit par le rapport de la longueur d'onde centrale de la source de lumière incohérente à la longueur d'onde de la source-laser est supérieur à 4, et
- des deuxièmes moyens de détection de lumière placés en regard des moyens séparateurs et prévus pour détecter les premier et deuxième faisceaux lumineux qui interfèrent l'un avec l'autre et pour fournir en sortie, sous forme électrique, un deuxième interférogramme lors d'une translation du support,

et en ce que les moyens de mise en forme sont prévus pour fournir lesdites premières impulsions à partir de ce deuxième interférogramme, chaque première impulsion correspondant à une période de ce deuxième interférogramme.

De préférence, les deuxièmes moyens optiques comprennent des premier et deuxième coins de cube, les troisièmes moyens optiques comprennent un troisième coin de cube et un troisième réflecteur de lumière qui sont disposés de façon que ladite deuxième partie du faisceau, qui est réfléchie par les moyens séparateurs, suive un trajet le long duquel elle est successivement réfléchie par le premier coin de cube, le troisième coin de cube, le deuxième coin de cube et le troisième réflecteur de lumière puis suive le trajet inverse, le nombre N étant ainsi égal à 8, et la longueur d'onde centrale de la source incohérente est au moins égale au double de la longueur d'onde de la source-laser.

Selon un deuxième mode de réalisation particulier, le système objet de l'invention comprend en outre :

- une règle munie de graduations et disposée en regard du support, parallèlement à la direction de translation de ce support,
- des moyens de lecture de ces graduations, qui sont fixés au support et prévus pour fournir des deuxièmes impulsions périodiques correspondant respectivement aux graduations, lors d'une translation du support, et
- des moyens d'asservissement des moyens de déplacement du support de façon que la fréquence des deuxièmes impulsions soit un sous-multiple de la fréquence des premières impulsions.

Les moyens d'asservissement peuvent comprendre :

- des moyens de division de fréquence qui reçoivent en entrée les premières impulsions et qui fournissent en sortie des impulsions dont la fréquence est le sous-multiple de la fréquence des premières impulsions, et
- des moyens de comparaison dont une entrée est reliée à la sortie des moyens de division de fréquence, dont une autre entrée est reliée à la sortie des moyens de lecture des graduations et dont la sortie commande les moyens de déplacement du support.

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue schématique d'un mode de réalisation particulier du système objet de l'invention,
- la figure 2 est un interférogramme qui est obtenu grâce au système de la figure 1,
- la figure 3 montre, dans sa partie A, un autre interférogramme permettant l'échantillonnage de l'interférogramme de la figure 2, dans sa partie B, des impulsions résultant de l'interférogramme de la partie A et, dans sa partie C, l'échantillonnage de l'interférogramme de la figure 2 par les impulsions de la partie B, et
- la figure 4 est une vue schématique et partielle d'un autre mode de réalisation particulier du système objet de l'invention.

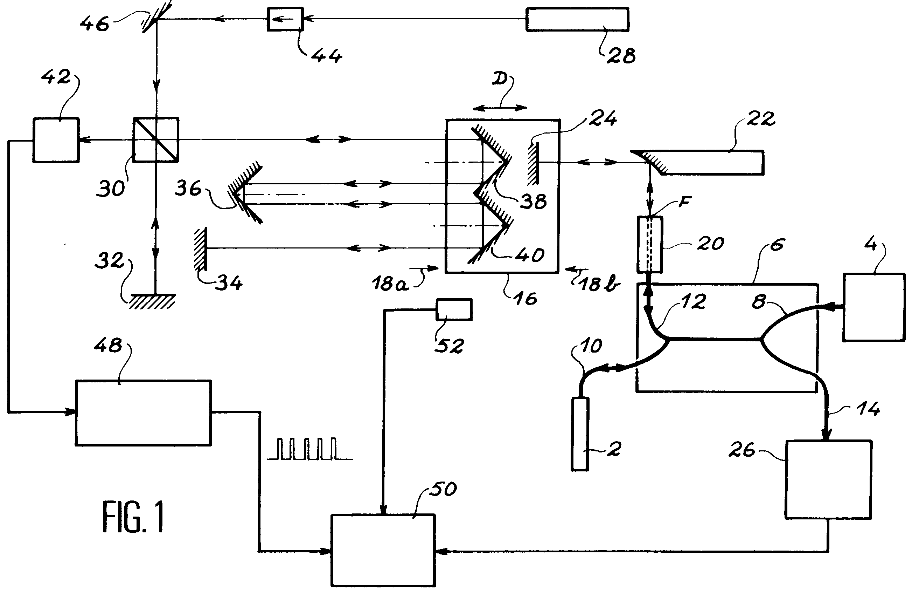

Le système interférométrique conforme à l'invention, qui est schématiquement représenté sur la figure 1, est destiné à détecter et localiser un ou plusieurs défauts réflecteurs qu'un guide d'ondes optiques 2 est susceptible de comporter.

Ce système comprend un interféromètre comportant une source de lumière incohérente 4 apte à émettre un rayonnement dont le spectre optique est large et a une enveloppe de forme sensiblement gaussienne, la longueur d'onde centrale de ce spectre optique étant notée $\lambda 0$.

On utilise par exemple une diode supraluminescente apte à émettre un rayonnement infrarouge dans le domaine de longueurs d'onde allant de 1,2 $\mu$m à 1,6 $\mu$m, $\lambda 0$ étant ainsi égal à 1,4 $\mu$m.

Cet interféromètre comprend également un coupleur optique 6 de type "2x2", à fibres optiques monomodes, dont les quatre branches portent respectivement les références 8, 10, 12 et 14.

L'interféromètre comprend aussi un support 16 qui est déplaçable en translation parallèlement à une direction donnée D et des moyens prévus pour déplacer le support 16 dans un sens et dans le sens opposé, parallèlement à la direction D.

Ces moyens sont par exemple des organes 18a et 18b qui donnent des impulsions de sens opposés au support 16 qui est monté sur coussin d'air, ce support 16 ayant ainsi un mouvement à vitesse sensiblement constante sur la plus grande partie de son trajet.

Les branches 10 et 12 du coupleur 6 reçoivent chacune la moitié du rayonnement issu de la source 4 qui est optiquement couplée à la branche 8 du coupleur 6.

La branche 10 du coupleur 6 est optiquement couplée au guide d'onde optique 2.

L'extrémité de la fibre optique constituant la branche 12 est polie perpendiculairement à son axe qui est perpendiculaire à la direction D.

Cette extrémité de la fibre 12 est montée dans une ferrule 20.

L'interféromètre de la figure 1 comprend aussi un réflecteur parabolique hors d'axe 22 au foyer F duquel se trouve l'extrémité de la fibre 12, l'axe (non représenté) de la parabole dont le miroir 22 épouse la forme étant parallèle à la direction D.

L'interféromètre comprend également un miroir-plan 24 qui est fixé au support 16 et disposé perpendiculairement à la direction D, en regard du miroir parabolique 22.

Le faisceau lumineux, qui provient de la source 4 et qui se propage dans la fibre 12 du coupleur 6, sort de l'extrémité de cette fibre pour être ensuite collimaté par le miroir 22 le long d'un axe parallèle à la direction D, vers le miroir 24.

Ce dernier réfléchit ce faisceau qui repasse donc dans la fibre 12 en suivant le trajet inverse.

Si le guide 2 comporte un défaut réflecteur, la branche 14 du coupleur 6 reçoit le faisceau lumineux réfléchi par ce défaut ainsi que le faisceau lumineux qui se propage dans la branche 12 en provenance du miroir 24.

Ces deux faisceaux interfèrent l'un avec l'autre dans la branche 14 du coupleur 6 et les interférences résultantes sont détectées par des moyens de photodétection et d'amplification 26 auxquels la branche 14 est optiquement couplée.

Ainsi, s'il existe un dioptre réflecteur dans le guide 2, les moyens 26 convertissent sous forme de signaux électriques les interférences lumineuses qui en résultent et amplifient ces signaux électriques.

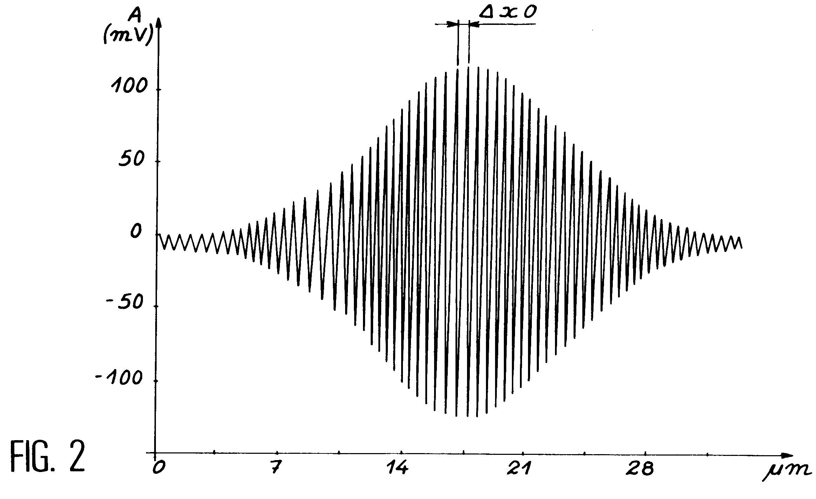

Dans ces conditions, en déplaçant le support 16 dans un sens ou dans l'autre, parallèlement à la direction D, les moyens de photodétection et d'amplification 26 fournissent, sous forme électrique, un interférogramme dont la représentation (grâce à des moyens de visualisation non représentés) correspond à la figure 2.

Si le guide 2 comporte une pluralité de dioptres réflecteurs, on obtient bien entendu une pluralité d'interférogrammes les uns à la suite des autres.

La forme et l'amplitude de chaque interférogramme dépend des caractéristiques spectrales de la source de lumière 4, des caractéristiques optiques du dioptre réflecteur correspondant ainsi que de la vitesse de déplacement du miroir 24, c'est-à-dire de la vitesse de déplacement du support 16.

L'interférogramme de la figure 2 est tracé dans un repère dont l'axe des ordonnées correspond à des amplitudes de réflexion A (exprimées en mV) et dont l'axe des abscisses correspond à une distance parcourue par le support 16 (exprimée en microns).

L'interféromètre du système de la figure 1 constitue un interféromètre de Michelson dans lequel le coupleur 6 remplace la lame séparatrice que comporte classiquement un tel interféromètre.

L'amplitude maximale de l'interférogramme de la figure 2 correspond à l'égalité entre la longueur optique du bras de l'interféromètre qui est terminé par le miroir 24 et la longueur optique du bras de l'interféromètre qui est terminé par le dioptre réflecteur du guide 2.

Du fait de la forme sensiblement gaussienne du spectre optique de la source de rayonnement 4, cet interférogramme a également une enveloppe de forme sensiblement gaussienne qui "module en amplitude" un signal sinusoïdal.

La période spatiale de ce signal sinusoïdal est notée $\Delta x0$.

Cette période spatiale est la distance minimale dont doit être déplacé le miroir 24 (et donc le support 16) pour obtenir, de la part des moyens 26, deux niveaux sensiblement identiques dans le signal.

D'après le principe de fonctionnement d'un interféromètre de Michelson, cette période spatiale est égale à $\lambda 0/2$.

Un tel interféromètre a une autre propriété : la largeur à mi-hauteur de l'enveloppe gaussienne de l'interférogramme est d'autant plus petite et contient d'autant moins de périodes de sinusoïde que la largeur à mi-hauteur de l'enveloppe du spectre optique de la source 4 est grande.

Le déplacement du support 16 à vitesse constante V permet :

- de détecter, avec le moins de bruit possible, la sinusoïde des interférogrammes dont la fréquence F0 (fréquence porteuse des interférogrammes) vaut 1/Δx0,
- de connaître la position exacte d'un dioptre réflecteur le long de l'axe du guide examiné.

On précise que la largeur à mi-hauteur de l'enveloppe de cette sinusoïde porteuse permet de déterminer la résolution spatiale du système, c'est-à-dire le pouvoir de séparer spatialement deux dioptres réflecteurs adjacents du guide 2.

Pour améliorer les résultats en sensibilité et résolution sans qu'une régulation de la vitesse de translation du support 16 soit nécessaire, le système de la figure 1 comprend des moyens de comptage de franges d'interférence.

Ces moyens consistent en un autre interféromètre de Michelson qui comprend une source laser monomode 28 dont la longueur d'onde est notée λ1.

Cette source 28 est par exemple un laser héliumnéon stabilisé en fréquence dont la longueur d'onde λ1 vaut 0,6328 µm.

Cet autre interféromètre comprend également un cube séparateur-mélangeur 30, deux miroirs plans 32 et 34, trois réflecteurs du type "coin de cube" 36, 38 et 40 et des moyens de photodétection et d'amplification 42 aptes à fournir un signal électrique lorsqu'ils reçoivent une lumière et à amplifier ce signal électrique.

Comme on le voit sur la figure 1, les miroirs 32, 34 et le coin de cube 36 sont fixes (comme l'est le miroir 22) tandis que les coins de cube 38 et 40 sont fixés sur le support 16 et sont donc mobiles en translation suivant la direction D.

Cet autre interféromètre comprend aussi successivement, après le laser 28, un isolateur optique 44, qui interdit tout passage de lumière en direction du laser 28, et un miroir plan 46 formant un angle de 45° avec la direction D.

La lame séparatrice du cube 30, qui est en regard de ce miroir plan 46 fait un angle de 90° avec ce dernier.

Le miroir-plan 32 est parallèle à la direction D et situé à l'opposé du miroir 46 par rapport au cube 30.

Le miroir 34 est perpendiculaire à la direction D tandis que les axes des coins de cube 36, 38 et 40 sont parallèles à cette direction D.

Comme on le voit sur la figure 1, les côtés réflecteurs des coins de cube 38 et 40 sont tournés vers le côté réflecteur du coin de cube 36 (et vers le cube séparateur-mélangeur 30), alors que le miroir-plan 24 est orienté en sens opposé par rapport à ce cube 30.

La lumière émise par le laser 28 traverse l'isolateur optique 44 puis se réfléchit sur le miroir-plan 46 et atteint le cube séparateur-mélangeur 30 qui la divise en deux faisceaux lumineux.

L'un de ces faisceaux est envoyé en direction du miroir-plan 32, se réfléchit sur ce dernier et retourne vers le cube 30 qui le réfléchit alors vers les moyens de photodétection et d'amplification 42.

L'autre faisceau est envoyé vers le coin de cube 38 et se réfléchit successivement sur ce dernier, sur le coin de cube 36, sur le coin de cube 40 et sur le miroir-plan 34.

A partir de ce dernier, cet autre faisceau retourne vers le cube 30 en se réfléchissant successivement sur le coin de cube 40, le coin de cube 36 et le coin 38.

Le cube 30 envoie alors cet autre faisceau vers les moyens de photodétection et d'amplification 42.

Ainsi ces moyens 42 détectent les interférences lumineuses des deux faisceaux précédemment mentionnés.

Les dispositions relatives des coins de cube 36, 38 et 40 et du miroir-plan 34 sont telles que, lorsque le support 16 se déplace d'une longueur Δx parallèlement à la direction D, la longueur du chemin optique du faisceau lumineux successivement réfléchi par le coin de cube 38, le coin de cube 36, le coin de cube 40 et le miroir-plan 34 et inversement varie de 8 fois Δx.

Lors d'un déplacement du support 16, les moyens 42 qui détectent les interférences mentionnées plus haut, fournissent, sous forme d'un signal électrique, un interférogramme dont la période spatiale Δx1 vaut λ1/8.

La longueur de cet interférogramme, ou sa durée dans le temps, est grande compte tenu de la nature de la source lumineuse 28 utilisée.

Selon l'invention, on compare le signal fourni par les moyens 26 au signal fourni par les moyens 42 lorsque ces moyens 26 détectent la présence d'un dioptre réflecteur dans le guide 2 et lorsque le support 16 est déplacé de Δx0.

Les moyens 26 fournissent alors une période d'interférogramme pendant que les moyens 42 fournissent un interférogramme comprenant un nombre P de périodes Δx1 tel que :

$$P = \Delta x0/\Delta x1 = 4.\lambda0/\lambda1.$$

En conséquence, si λ0 est au moins égal à 2λ1, ce qui est le cas dans l'exemple décrit, P est au moins égal à 8.

Plus généralement, en utilisant un nombre suffisant de coins de cube, il est possible d'obtenir, pour le chemin optique dont il a été question plus haut, une variation de N.Δx lorsque le support 16 se déplace de Δx.

Dans ce cas, la période de l'interférogramme fourni par les moyens 42 est égale à λ1/N et le nombre P est égal à (N/2).λ0/λ1.

On peut ainsi obtenir un nombre P encore plus grand que précédemment.

En vue de l'échantillonnage dont il est question par la suite et pour satisfaire au théorème de Shannon, il convient que P soit supérieur à 2 (de préférence très supérieur à 2) c'est-à-dire que N.λ0/λ1 soit supérieur à 4.

En revenant à l'exemple où le nombre N vaut 4 et le nombre P vaut donc au moins 8, on voit sur la figure 1 que le système comprend aussi des moyens de mise en forme 48, dont l'entrée est reliée à la sortie des moyens 42, ainsi que des moyens électroniques de traitement 50 qui reçoivent en entrée les signaux de sortie des moyens 48 et les signaux de sortie des moyens 26.

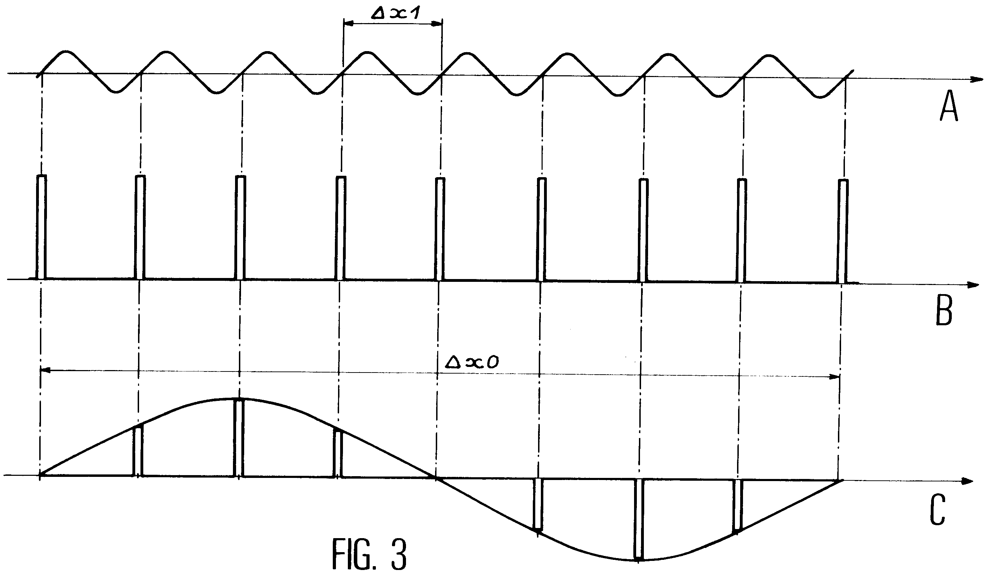

Les moyens 48 mettent en forme les signaux fournis par les moyens 42 : lorsque le support 16 est déplacé dans un sens, les moyens 42 fournissent, sous forme électrique, un interférogramme formant une quasi-sinuoïde de période spatiale $\Delta x1$ (compte tenu de la nature de la source 28), comme on le voit sur la partie A de la figure 3.

A partir de cette quasi-sinusoïde, les moyens 48 fournissent une suite périodique d'impulsions électriques brèves synchronisées sur les instants de passage à 0 de cette quasi-sinusoïde (partie B de la figure 3).

Les moyens 50 sont prévus pour échantillonner, à raison de huit échantillons par période $\Delta x0$, les interférogrammes fournis sous forme électrique par les moyens 26 à l'aide de ces brèves impulsions (partie C de la figure 3).

Ces moyens 50 comprennent également des mémoires à accès aléatoires ("*random access mémories*"), ou mémoires RAM, pour stocker les échantillons ainsi obtenus.

Ainsi, il n'y a pas besoin de stabiliser la vitesse de déplacement du support 16.

Il suffit de définir la position de départ de ce support 16 (position qui constitue un "top" de départ du comptage des franges d'interférence de l'interféromètre comportant le coupleur 6) avec une excellente résolution.

Pour ce faire, on utilise un capteur de position 52 de haute résolution et de bonne stabilité mécanique qui fournit le top de départ aux moyens 50.

Dans les moyens électroniques de traitement 50, on met en oeuvre des techniques numériques classiques de traitement de signal pour détecter la présence d'un dioptre réflecteur, cette détection étant possible même si le coefficient de réflexion de ce dioptre est faible, l'interférogramme correspondant étant alors noyé dans un bruit de fond dû notamment aux moyens de photodétection et d'amplification.

Les moyens 50 sont également prévus pour déterminer la position du dioptre grâce aux échantillons mémorisés et pour analyser la phase de la sinusoïde porteuse de l'interférogramme.

On exploite entièrement le signal fourni par les moyens de détection et d'amplification 26, grâce au théorème de Shannon (on a en effet choisi un nombre suffisant d'échantillons par période $\Delta x0$ pour avoir toute l'information relative à cette sinusoïde) et à la transformée de Fourier.

Bien entendu, les moyens 50 sont munis de moyens de visualisation non représentés grâce auxquels les utilisateurs du système obtiennent les résultats recherchés.

Le système représenté sur la figure 1 est très performant pour repérer les positions du support 16 avec une très grande précision du fait que ce système de comptage de franges d'interférence en lumière visible utilise en tant que référence un étalon secondaire de longueur (source-laser 28).

Cependant, il est parfois impossible d'exploiter un tel système pour des questions d'environnement mécanique et électronique.

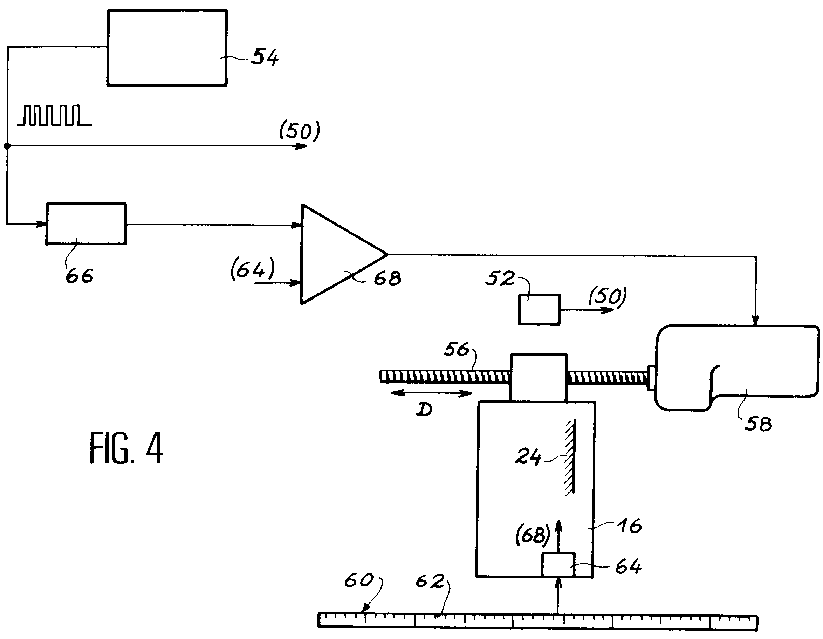

Pour remédier à cet inconvénient, on a conçu un autre système conforme à l'invention qui est schématiquement et partiellement représenté sur la figure 4.

Ce système de la figure 4 comprend encore la source 4, le coupleur 6, les miroirs 22 et 24, les moyens 26 et 50 et le capteur 52 de la figure 1 ainsi que le support 16 portant le miroir 24.

Mais, dans ce système de la figure 4, les éléments du système de la figure 1 portant les références 28 à 40 sont supprimés.

Ces éléments sont remplacés par un générateur d'impulsions d'échantillonnage 54 dont la fréquence est notée Fg et qui sont envoyées à l'entrée des moyens 50 comme l'étaient les impulsions fournies par les moyens 48 de la figure 1.

De plus, dans le cas de la figure 4, le support 16 est déplacé en translation parallèlement à la direction D par un entraînement à vis hélicoïdale référencé 56, commandé par un moteur électrique 58.

Une règle fixe 60, qui est parallèle à la direction D et sur laquelle sont formées de fines graduations 62, disposé en regard du support 16.

De façon connue dans le domaine des machines-outils à commande numérique, un capteur optique 64, qui est solidaire du support 16, lit les graduations dont le pas $\Delta x1$ vaut par exemple 0,5 µm.

Ainsi, lorsque le support se déplace de $\Delta x1$, le capteur 64 fournit un signal électrique impulsionnel (ou en forme d'arche de sinusoïde).

Du fait que ce pas $\Delta x1$ de 0,5 µm est de l'ordre de grandeur de la longueur d'onde centrale $\lambda0$ de la source 4, la fréquence F1 des impulsions émises par le capteur optique 64, qui est égale à $V/\Delta x1$ où V représente la vitesse du support 16, serait trop faible pour permettre un stockage des interférogrammes avec un nombre suffisant d'échantillons.

C'est pourquoi, dans le système de la figure 4, la vitesse de rotation du moteur 58 est asservie de façon que la fréquence F1, qui est aussi la fréquence de lecture des graduations de la règle 60, soit un sous-multiple Fg/M de la fréquence Fg qui vaut par exemple 2 MHz.

Pour ce faire, le système de la figure 4 comprend des moyens 66 de division de la fréquence Fg, qui reçoivent en entrée les impulsions fournies par le générateur 54 et qui fournissent en sortie des impulsions de fréquence Fg/M où M vaut par exemple 10.

Le système de la figure 4 comprend aussi un comparateur 68 dont une entrée est reliée à la sortie des moyens 66 et dont l'autre entrée est reliée à la sortie du capteur optique 64.

Le moteur 58 est commandé par la sortie du comparateur 68.

A chaque impulsion d'échantillonnage du générateur 54 correspond une position du support 16 (on considère que la vitesse de déplacement V reste constante entre deux impulsions correspondant à deux graduations adjacentes de la règle 60).

On améliore ainsi d'un facteur M la précision sur la position du support 16 (et donc du miroir 24).

On revient ci-après sur l'utilisation des systèmes des figures 1 et 4.

Le support 16, que comporte chacun de ces systèmes, est mobile en translation le long d'un axe, entre deux positions extrêmes.

Au cours de son déplacement entre les deux extrémités de son trajet, ce support 16 passe à proximité du capteur de position 52 de grande résolution, qui est fixe.

Ce capteur sert de repère à partir duquel on définit la position du support 16

- par comptage des franges détectées par les moyens 42, dans le cas du système de la figure 1,
- ou par comptage des impulsions fournies par le générateur 54, dans le cas du système de la figure 4,

avec une grande précision et une grande reproductibilité du fait que la position du capteur 52 est fixe par rapport au miroir 34 et au coin de cube 36, dans le cas du système de la figure 1, et par rapport aux extrémités de la règle 60, dans le cas du système de la figure 4.

Lorsque le guide 2, qui est couplé à la branche, ou "bras de test", 10 du coupleur 6, présente un défaut réflecteur localisé à une distance optique L du centre du coupleur 6 et lorsque le miroir 24 passe par une position telle que sa distance optique au centre du coupleur 6 est égale à L, les moyens de photodétection 26 fournissent un signal, appelé "interférogramme", tel que celui qui est représenté à la figure 2, en fonction de la position du miroir 24 le long de l'axe de translation du support 16.

L'amplitude et la forme de cet interférogramme sont des fonctions de la vitesse de déplacement et des fibres utilisées mais aussi des propriétés spectrales de la source 4 et de celles du centre réflecteur localisé le long du guide 2.

Les moyens de couplage des franges (ou des impulsions) et le traitement du signal que l'on applique à partir de ces franges (ou de ces impulsions) par échantillonnage, à l'interférogramme de la figure 2, permettent de détecter l'existence de centres réflecteurs, d'en connaître les positions avec précision ainsi que les propriétés spectrales (coefficient de réflexion, dispersion chromatique, ...) pendant le déplacement du support 16.

## Revendications

1. Système interférométrique de détection et de localisation de défauts réflecteurs d'une structure guidant la lumière (2), ce système comprenant un premier interféromètre comportant :
   - une source de lumière incohérente (4),
   - un coupleur optique (6) à quatre branches, dont une première branche (8) est optiquement couplée à la source de lumière incohérente et dont une deuxième branche (10) est optiquement couplée à la structure guidant la lumière,
   - un support (16),
   - des moyens (18a, 18b; 58) de déplacement du support en translation suivant une direction donnée (D) et à vitesse constante,
   - un premier réflecteur de lumière (24) qui est fixé au support et qui est apte à réfléchir, parallèlement à la direction de translation du support, un faisceau lumineux parallèle à cette direction,
   - des premiers moyens optiques (22) prévus pour recevoir la lumière issue d'une troisième branche (12) du coupleur (6) et pour envoyer cette lumière vers le premier réflecteur (24), suivant la direction de translation du support,
   - des premiers moyens (26) de détection de lumière qui sont optiquement couplés à une quatrième branche (14) du coupleur et qui sont aptes à fournir en sortie, lors d'une translation du support, un premier interférogramme sous forme électrique, pour chaque défaut réflecteur que la structure guidant la lumière (2) est susceptible de comporter,

   le système étant caractérisé en ce qu'il comprend en outre :
   - des moyens (28 à 48; 54) de génération de premières impulsions électriques périodiques, et
   - des moyens électroniques de traitement (50) qui reçoivent en entrée ces premières impulsions et le premier interférogramme sous forme électrique et qui sont aptes à échantillonner ce premier interférogramme par les premières impulsions, mémoriser les échantillons ainsi obtenus et localiser les défauts réflecteurs de la structure guidant la lumière (2) au moyen des échantillons mémorisés.

**2.** Système selon la revendication 1, caractérisé en ce que les premiers moyens optiques comprennent un miroir parabolique hors d'axe (22) dont le foyer (F) coïncide avec l'extrémité de la troisième branche (12) du coupleur (6) et qui est apte à réfléchir la lumière issue de cette troisième branche parallèlement à la direction de translation du support.

**3.** Système selon l'une quelconque des revendications 1 et 2, caractérisé en ce que les moyens de génération des premières impulsions comprennent un deuxième interféromètre et des moyens de mise en forme (48), le deuxième interféromètre comportant :
- une source-laser monomode (28),
- des moyens séparateurs de faisceau lumineux (30) prévus pour recevoir un faisceau lumineux issu de cette source-laser et pour transmettre une première partie et réfléchir une deuxième partie de ce faisceau,
- un deuxième réflecteur de lumière (32) prévu pour réfléchir cette première partie vers les moyens séparateurs qui forment à partir de celle-ci un premier faisceau lumineux,
- des deuxièmes moyens optiques (38, 40) fixés au support (16) et des troisièmes moyens optiques (34, 36) qui sont placés en regard de ce support (16) et qui coopèrent avec les deuxièmes moyens optiques pour recevoir et réfléchir, suivant un chemin optique déterminé, ladite deuxième partie vers les moyens séparateurs qui forment à partir de celle-ci un deuxième faisceau lumineux et font interférer celui-ci avec le premier faisceau lumineux, le chemin optique déterminé variant de la quantité $N.\Delta x$ lorsque le support est déplacé en translation d'une longueur $\Delta x$, N étant un nombre dont le produit par le rapport de la longueur d'onde centrale de la source de lumière incohérente à la longueur d'onde de la source-laser est supérieur à 4, et
- des deuxièmes moyens (42) de détection de lumière placés en regard des moyens séparateurs (30) et prévus pour détecter les premier et deuxième faisceaux lumineux qui interfèrent l'un avec l'autre et pour fournir en sortie, sous forme électrique, un deuxième interférogramme lors d'une translation du support,

et en ce que les moyens de mise en forme (48) sont prévus pour fournir lesdites premières impulsions à partir de ce deuxième interférogramme, chaque première impulsion correspondant à une période de ce deuxième interférogramme.

**4.** Système selon la revendication 3, caractérisé en ce que les deuxièmes moyens optiques comprennent des premier (38) et deuxième (40) coins de cube, en ce que les troisièmes moyens optiques comprennent un troisième coin de cube (36) et un troisième réflecteur de lumière (34) qui sont disposés de façon que la deuxième partie du faisceau, qui est réfléchie par les moyens séparateurs, suive un trajet le long duquel elle est successivement réfléchie par le premier coin de cube (38), le troisième coin de cube (36), le deuxième coin de cube (40) et le troisième réflecteur de lumière (34) puis suive le trajet inverse, le nombre N étant ainsi égal à 8, et en ce que la longueur d'onde centrale de la source incohérente (4) est au moins égale au double de la longueur d'onde de la source-laser (28).

**5.** Système selon l'une quelconque des revendications 1 et 2, caractérisé en ce qu'il comprend en outre :
- une règle (60) munie de graduations (62) et disposée en regard du support (16), parallèlement à la direction de translation de ce support,
- des moyens (64) de lecture de ces graduations, qui sont fixés au support (16) et prévus pour fournir des deuxièmes impulsions périodiques correspondant respectivement aux graduations, lors d'une translation du support, et
- des moyens (66, 68) d'asservissement des moyens (58) de déplacement du support de façon que la fréquence des deuxièmes impulsions soit un sous-multiple de la fréquence des premières impulsions.

**6.** Système selon la revendication 5, caractérisé en ce que les moyens d'asservissement comprennent :
- des moyens (66) de division de fréquence qui reçoivent en entrée les premières impulsions et qui fournissent en sortie des impulsions dont la fréquence est le sous-multiple de la fréquence des premières impulsions, et
- des moyens (68) de comparaison dont une entrée est reliée à la sortie des moyens (66) de division de fréquence, dont une autre entrée est reliée à la sortie des moyens (64) de lecture des graduations et dont la sortie commande les moyens (58) de déplacement du support.

FIG. 1

EP 0 669 525 A2

FIG. 2

FIG. 3

EP 0 669 525 A2

FIG. 4